(19) Europäisches Patentamt
European Patent Office
Office européen des brevets

(11) **EP 2 660 522 A2**

(12) **EUROPEAN PATENT APPLICATION**

(43) Date of publication:
**06.11.2013 Bulletin 2013/45**

(51) Int Cl.:
*F23R 3/28* (2006.01)   *F23D 14/48* (2006.01)
*F23D 14/58* (2006.01)

(21) Application number: **13165811.4**

(22) Date of filing: **29.04.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.04.2012 US 201213459930**

(71) Applicant: **General Electric Company Schenectady, New York 12345 (US)**

(72) Inventors:
• **Idahosa, Uyigue Omoma Niskayuna, NY 12309 (US)**

• **McManus, Keith Robert Niskayuna, NY 12309 (US)**
• **Brand, Anthony Robert Niskayuna, NY 12309 (US)**
• **Karim, Hasan Niskayuna, NY 12309 (US)**
• **Hughes, Michael John Niskayuna, NY 12309 (US)**

(74) Representative: **Cleary, Fidelma GPO Europe GE International Inc. The Ark 201 Talgarth Road Hammersmith London W6 8BJ (GB)**

(54) **Combustion nozzle and a related method thereof**

(57)    A combustion nozzle 28 includes at least one passage 30 having a mixing section 32 and an exit section 34. The mixing section includes an air inlet, and a fuel inlet. The mixing section has a first length and a first diameter. The exit section has a second length different from the first length, and a second diameter different from the first diameter.

FIG. 2

EP 2 660 522 A2

## Description

The invention relates generally to combustors, and more specifically, to a combustion nozzle for injecting an air-fuel mixture into a combustion zone within the combustor.

A combustor is a component or area of an engine where combustion takes place. In a gas turbine engine, for example, a compressor feeds high pressure air to the combustor or combustion chamber. The combustor then heats the air along with a fuel at a constant pressure. After combustion, the generated exhaust gases are fed from the combustor to the turbine via the nozzle guide vanes. Such an engine employed in a gas turbine plant or a combined cycle plant, for example, is operated to achieve higher operational efficiency under higher temperature and higher pressure conditions, and tends to increase emissions (for example, NOx) in an exhaust gas stream. Although various factors for generation of NOx are known, the dominant one is flame temperature in a combustor. NOx emissions are proportional to the flame temperature in a combustor.

Increasing turbulence intensities within the combustion zone reduces NOx emissions. NOx is reduced at higher turbulence levels due to the enhanced mixing of products in the flame zone, effectively lowering the local flame temperature in the combustion zone. One way of increasing turbulence is to increase the velocity of the jet. In such a scenario, the levels of turbulence are directly correlated to the jet velocity.

In accordance with one embodiment of the present invention, an exemplary combustion nozzle is disclosed. The combustion nozzle includes at least one passage having a mixing section and an exit section. The mixing section includes an air inlet, and a fuel inlet. The mixing section has a first length and a first diameter. The exit section has a second length different from the first length, and a second diameter different from the first diameter.

In accordance with another exemplary embodiment of the present invention, a gas turbine is disclosed. The gas turbine includes a compressor, an combustor having an exemplary combustion nozzle and a turbine.

In accordance with another exemplary embodiment of the present invention, a method includes mixing air and a fuel within a mixing section of a combustion nozzle to generate an air-fuel mixture. The mixing section has a first length and a first diameter. The method further includes injecting the air-fuel mixture via an exit section of the combustion nozzle to a combustion zone disposed downstream of the combustion nozzle. The exit section has a second length different from the first length, and a second diameter different from the first diameter. The method also includes generating a turbulent flow of the air-fuel mixture in the combustion zone.

In accordance with another exemplary embodiment of the present invention, a method includes forming at least one passage in a combustion nozzle. one passage having a mixing section and an exit section. The mixing section includes an air inlet, and a fuel inlet. The mixing section has a first length and a first diameter. The exit section has a second length different from the first length, and a second diameter different from the first diameter.

These and other features, aspects, and advantages of the present invention will become better understood when the following detailed description is read with reference to the accompanying drawings in which like characters represent like parts throughout the drawings, wherein:

FIG. 1 is a diagrammatical representation of a gas turbine engine having an exemplary combustor in accordance with an exemplary embodiment of the present invention;

FIG. 2 is a diagrammatical representation of a combustor having an exemplary combustion nozzle in accordance with an exemplary embodiment of the present invention;

FIG. 3 diagrammatical representation of a combustion nozzle in accordance with an exemplary embodiment of the present invention;

FIG. 4 is a diagrammatical representation of an exit section of a combustion nozzle in accordance with an exemplary embodiment of the present invention;

FIG. 5 is a diagrammatical representation of an exemplary combustion nozzle in accordance with an exemplary embodiment of the present invention;

FIG. 6 is a diagrammatical representation of an exemplary combustion nozzle in accordance with an exemplary embodiment of the present invention;

FIG. 7 is a diagrammatical representation of an exemplary combustion nozzle in accordance with an exemplary embodiment of the present invention;

FIG. 8 is a diagrammatical representation of an exemplary combustion nozzle in accordance with an exemplary embodiment of the present invention;

FIG. 9 is a diagrammatical representation of an exemplary combustion nozzle in accordance with an exemplary embodiment of the present invention;

FIG. 10 is a diagrammatical representation of an exemplary combustion nozzle in accordance with an exemplary embodiment of the present invention; and

FIG. 11 is a diagrammatical representation of an exemplary combustion nozzle in accordance with an exemplary embodiment of the present invention.

In accordance with the embodiments of the present invention, a combustion nozzle is disclosed. The exemplary combustion nozzle includes at least one passage including a mixing section and an exit section. The mixing section has a first length and a first diameter and the exit section has a second length different from the first length, and a second diameter different from the first diameter. Air and fuel are mixed in the mixing section and the exit section generates turbulent flow of the air-fuel mixture in a combustion zone of a combustor. In other words, the degree of fuel/air mixedness in the mixing section is decoupled from the turbulence intensity levels entering the combustion zone of the combustor. Such generation of turbulence level is useful for reducing NOx emissions, especially at higher flame temperatures in the combustor. Turbulence level for reducing NOx, can be controlled based on length to diameter ratio of the nozzle exit section. Additionally, diameter and length of the mixing section may be independently designed for optimal mixing of air/fuel for further NOx reduction compared to a scenario where air and fuel are unmixed.

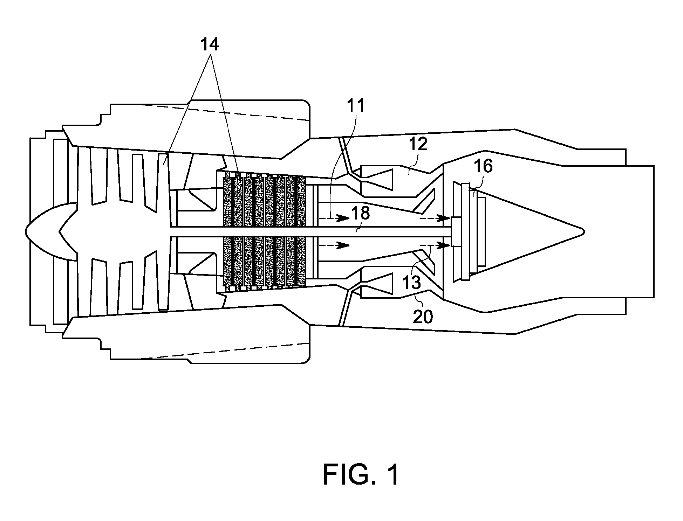

Turning now to drawings and referring first to FIG. 1, a gas turbine 10 having a low emission combustor 12 is illustrated. The gas turbine 10 includes a compressor 14 configured to compress ambient air. The combustor 12 is in flow communication with the compressor 14 and is configured to receive compressed air 11 from the compressor 14 and to combust a fuel stream to generate a combustor exit gas stream 13. In the illustrated embodiment, the combustor 12 includes a combustor housing 20 defining a combustion area. In one embodiment, the combustor 12 includes a can combustor. In an alternate embodiment, the combustor 12 includes a can-annular combustor or a purely annular combustor. In addition, the gas turbine 10 includes a turbine 16 located downstream of the combustor 12. The turbine 16 is configured to expand the combustor exit gas stream 13 to drive an external load. In the illustrated embodiment, the compressor 14 is driven by the power generated by the turbine 16 via a shaft 18.

The combustor 12 includes a combustion nozzle for receiving compressed air 11 and the fuel stream, mix the air 11 and the fuel stream to generate an air-fuel mixture, and inject the air-fuel mixture to a combustion zone. The combustion nozzle is explained in greater detail with reference to subsequent figures.

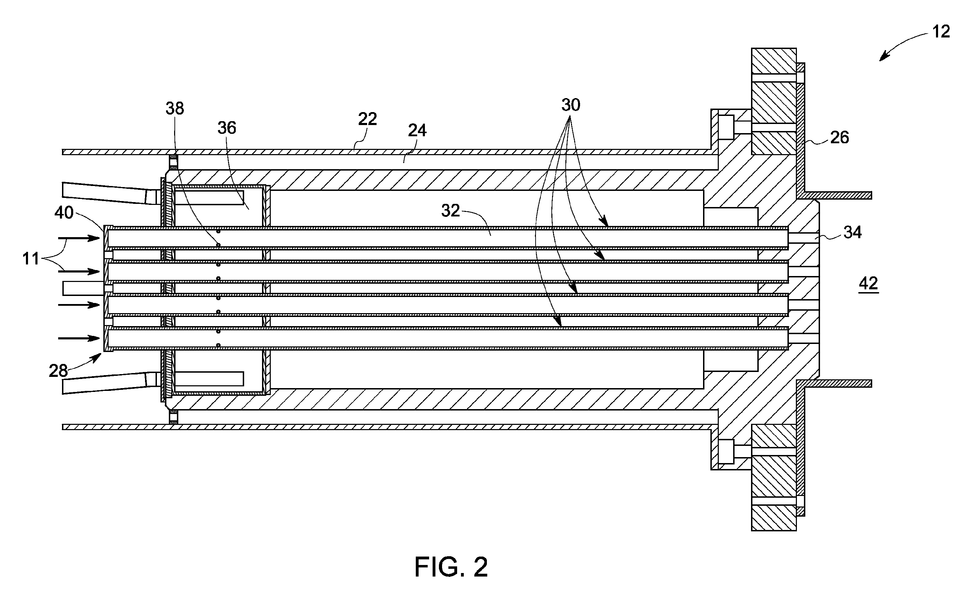

Referring to FIG. 2, the combustor 12 in accordance with the aspects of FIG. 1 is illustrated. The exemplary combustor 12 includes a combustor housing 22 defining a combustion chamber 24. A cover assembly (not shown) may be provided on one end of the combustor housing 22. A combustion liner 26 is disposed within the combustor housing 22. The combustion liner 26 may be provided with a plurality of dilution holes.

A combustion nozzle 28 is disposed within the combustion chamber 24. The exemplary combustion nozzle 28 includes at least one passage (tube) 30 having a mixing section 32 and an exit section 34. In the illustrated embodiment, four passages 30 are shown. In other embodiments, the number of passages 30 varies depending on the application. The mixing section 32 has a first length and a first diameter, and the exit section 34 has a second length different from the first length, and a second diameter different from the first diameter. The combustor 12 further includes a fuel plenum 36 for supplying a fuel to the combustion chamber 24. The fuel enters the combustion nozzle 28 via a plurality of fuel inlet holes 38 provided in the mixing section 32 of each passage 30. The passage 30 also has an air inlet 40 for receiving the air stream 11 from the compressor.

In certain embodiments, the fuel may include hydrocarbons, natural gas, or high hydrogen gas, or hydrogen, or biogas, or carbon monoxide, or syngas, or inert gas, or water vapor, or oxidizers along with predetermined amount of diluents. Diluents may include nitrogen, carbon dioxide, water, steam, or the like.

The mixing section 32 of the combustion nozzle 28 is configured to mix air 11 and the fuel and generate an air-fuel mixture. The exit section 34 is configured to receive the air-fuel mixture and inject the air-fuel mixture to a combustion zone 42 of the combustion chamber 24. The exit section 34 is configured to generate turbulent flow of the air-fuel mixture in the combustion zone 42 of the combustor 12. The dimensions of the exit section 34 is different from that of the mixing section 32 such that fuel/air mixing in the mixing section 32 is decoupled from the turbulence generated in the combustion zone 42 of the combustor 12. Such generation of turbulence level is useful for reducing NOx emissions, especially at higher flame temperatures in the combustor 12.

As discussed previously, increasing turbulence intensities within the combustion zone reduces NOx emissions. NOx is reduced at higher turbulence levels due to the enhanced mixing of combustion products and fresh reactants in the flame zone, effectively lowering the local flame temperature in the combustion zone. Such a phenomenon is effectively a combustion exhaust gas recirculation (EGR) at micro (very small) scales. One way of increasing turbulence is to increase the velocity of the jet. In such a scenario, the levels of turbulence are directly correlated to the jet velocity.

In accordance with the embodiments of the present invention, the generation of the turbulence via the exit section 34 allows turbulence intensification and mixing enhancements to be carried out in parallel. Specifically, a modified length to diameter ratio of the exit section allows the shear rates of the air-fuel mixture jet entering the combustion zone 42 to be controlled. For example, lower length to diameter ratio are experimentally observed to yield lower NOx emissions through enhanced shearing introduced into the combustion zone 42. By decoupling turbulence from reactant mixedness levels, NOx emissions reduction can be obtained.

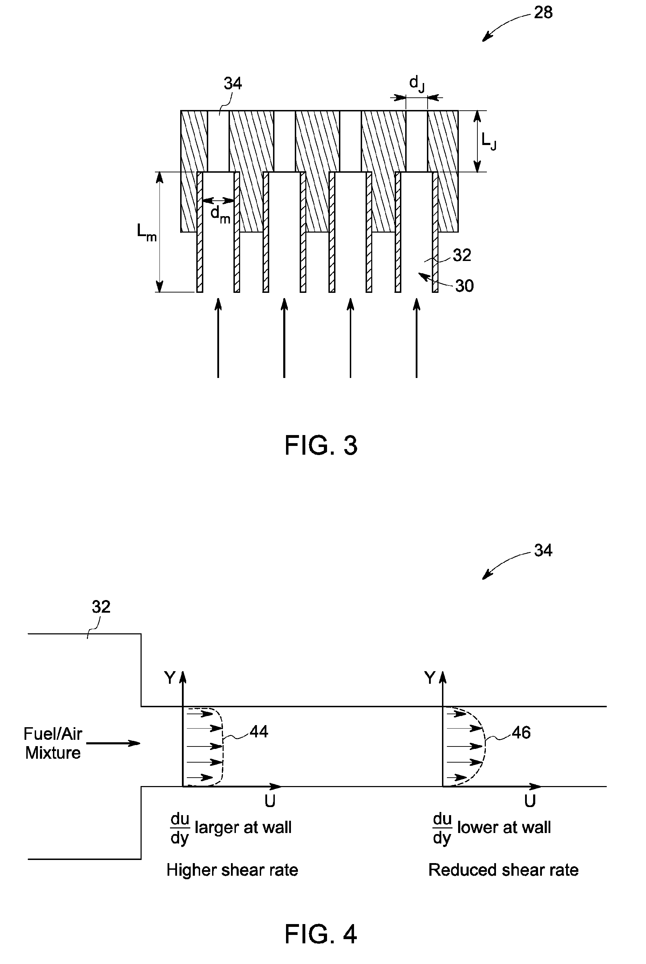

Referring to FIG. 3, the combustion nozzle 28 in accordance with an exemplary embodiment of the present invention is disclosed. The exemplary combustion nozzle 28 includes a plurality of passages 30, each passage 30 having a mixing section 32 and an exit section 34. The mixing section 32 has a first length ($L_m$) and a first diameter ($d_m$), and the exit section 34 has a second length ($L_j$) different from the first length ($L_m$), and a second diameter ($d_j$) different from the first diameter ($d_m$).

Referring to FIG. 4, the mixing section 32, and the exit section 34 of the combustion nozzle in accordance with an embodiment of the present invention is disclosed. As discussed above, the exit section 34 has a length and diameter different from the length, and diameter of the mixing section. A velocity distribution of the air-fuel mixture at an upstream location of the exit section 34 is represented by a curve 44. Shear rate of flow is represented by the relation: $\tau \equiv \mu \dfrac{du}{dy}$; where $\mu$ is viscosity of flow, u is the fluid velocity, du/dy is representative of a velocity gradient. Curve 44 shows du/dy is larger at a wall surface of the exit section 34 and is representative of a higher shear rate. The flame in the combustion zone stabilizes in the shear layer as the jets expand into the combustor. Increased shear rates from higher turbulence amplifies the mixing of exhaust gases in the flame zone contributing to NOx reductions.

A velocity distribution of the air-fuel mixture at a downstream location of the exit section 34 is represented by a curve 46. Curve 46 shows du/dy is relatively lower at a wall surface of the exit section 34 and is representative of a relatively lower shear rate. As noted above, a modified length to diameter ratio of the exit section 34 allows the shear rates of the air-fuel mixture jet entering the combustion zone to be controlled. Lower length to diameter ratio yield lower NOx emissions through enhanced shearing introduced into the combustion zone 42.

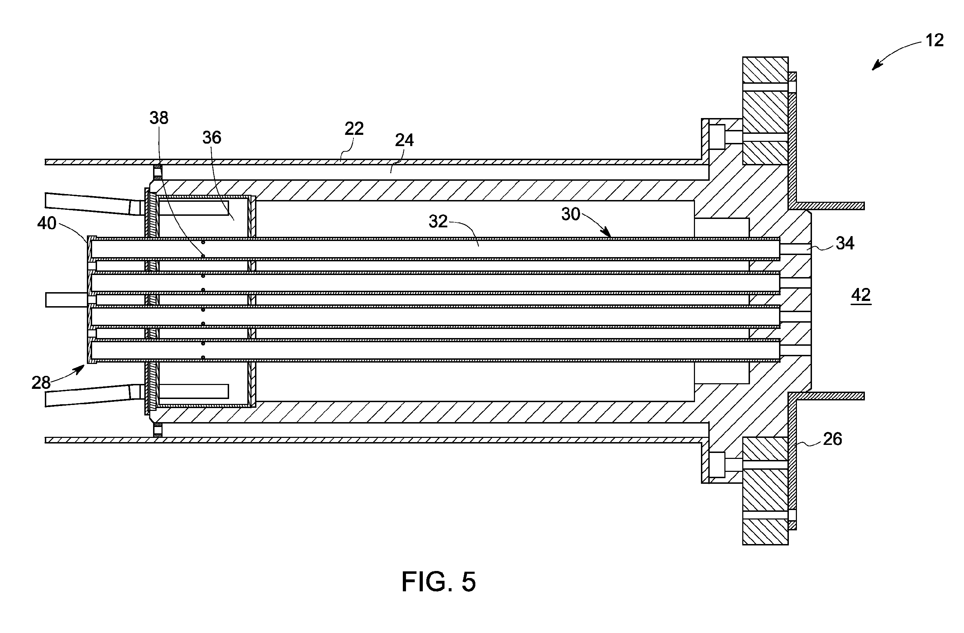

Referring to FIG. 5, the combustor 12 in accordance with the aspects of FIG. 2 is illustrated. The combustion nozzle 28 is disposed within the combustion chamber 24. The exemplary combustion nozzle 28 includes at least one passage (tube) 30 having the mixing section 32 and the exit section 34. The mixing section 32 has a first length and a first diameter, and the exit section 34 has a second length different from the first length, and a second diameter different from the first diameter. In the illustrated embodiment, diameter of the exit section 34 is smaller than the diameter of the mixing section 32. Length of the mixing section 32 is greater than the length of the exit section 34.

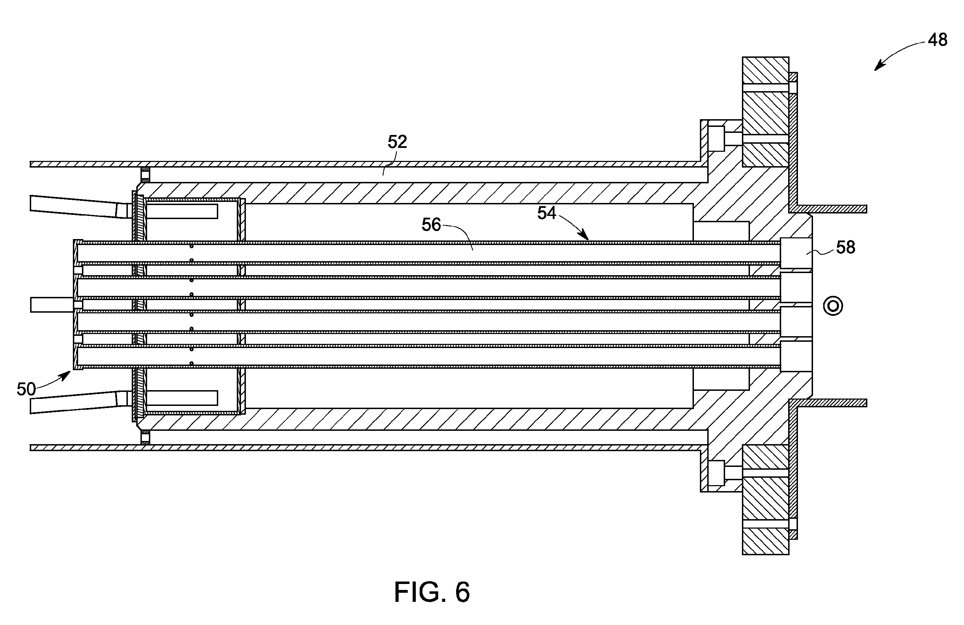

Referring to FIG. 6, a combustor 48 in accordance with another embodiment of the present invention is illustrated. A combustion nozzle 50 is disposed within a combustion chamber 52. The exemplary combustion nozzle 50 includes at least one passage (tube) 54 having a mixing section 56 and an exit section 58. The mixing section 56 has a first length and a first diameter, and the exit section 58 has a second length different from the first length, and a second diameter different from the first diameter. In the illustrated embodiment, diameter of the exit section 58 is larger than the diameter of the mixing section 56. Length of the mixing section 56 is greater than the length of the exit section 58.

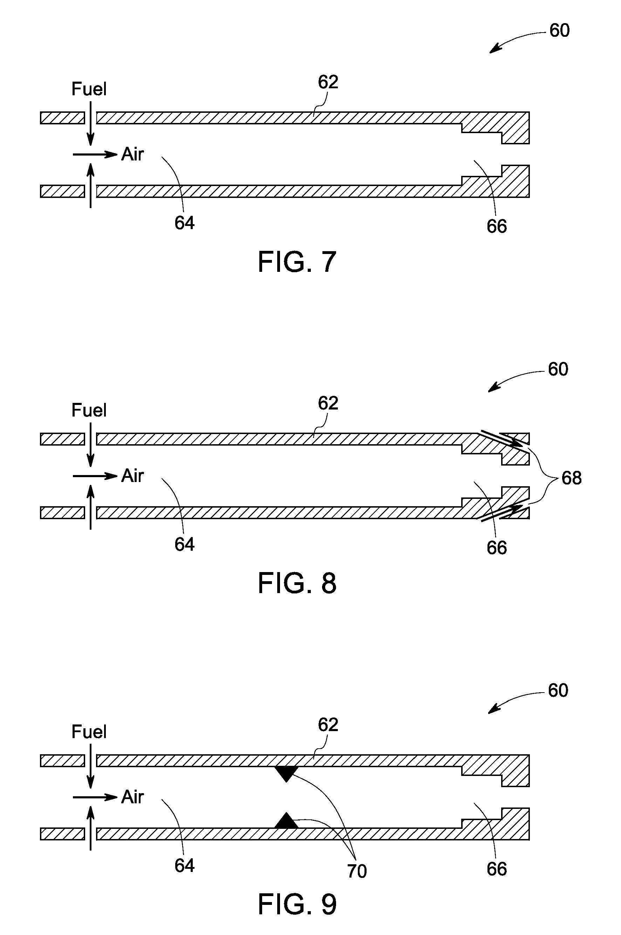

Referring to FIG. 7, a combustion nozzle 60 in accordance with an exemplary embodiment of the present invention is illustrated. The exemplary combustion nozzle 60 includes at least one passage (tube) 62 having a mixing section 64 and an exit section 66. The mixing section 64 has a first length and a first diameter, and the exit section 66 has a second length different from the first length, and a second diameter different from the first diameter. In the illustrated embodiment, the second diameter is a gradually varying diameter. The second diameter of the exit section 66 is smaller than the first diameter of the mixing section 64. Length of the mixing section 64 is greater than the length of the exit section 66.

Referring to FIG. 8, the combustion nozzle 60 in accordance with an exemplary embodiment of the present invention is illustrated. The illustrated embodiment is similar to the embodiment shown in FIG. 7. Additionally, the exit section 66 includes one or more injection holes 68 for injecting air into the combustion zone for further enhancing the turbulence intensity levels in the air-fuel mixture delivered to the combustion zone.

Referring to FIG. 9, the combustion nozzle 60 in accordance with an exemplary embodiment of the present invention is illustrated. The illustrated embodiment is similar to the embodiment shown in FIG. 7. Additionally, the mixing section 64 includes a plurality of a plurality of turbulence generating devices 70 for generating turbulent flow of the air-fuel mixture. In another embodiment, the plurality of turbulence generating devices 70 are also disposed in the exit section 58 of the combustion nozzle 60. In one embodiment, the plurality of turbulence generating devices 70 are disposed circumferentially in the nozzle 60. In another embodiment, the plurality of turbulence generating devices 70 are disposed axially in the nozzle 60. In some embodiments, the plurality of turbulence generating devices 70 may include mesh, screen, or the like.

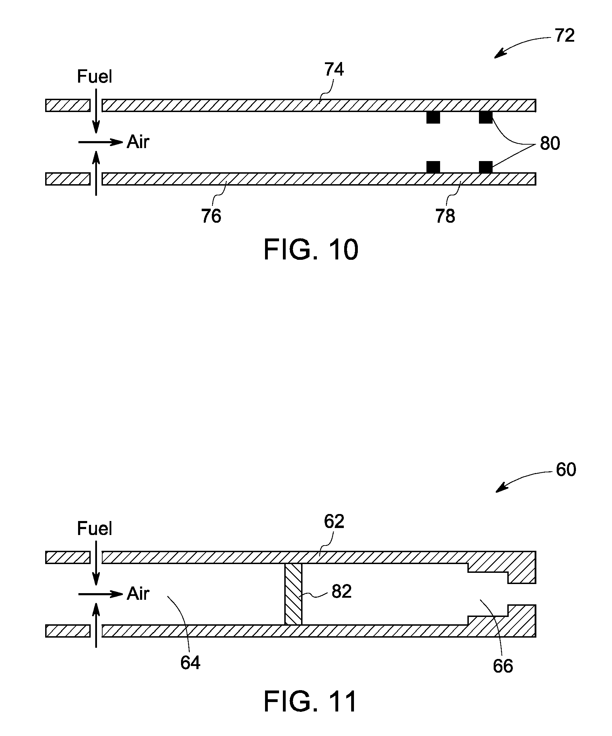

Referring to FIG. 10, the combustion nozzle 72 in accordance with an exemplary embodiment of the present invention is illustrated. The exemplary combustion nozzle 72 includes at least one passage (tube) 74 having a mixing section 76 and an exit section 78. The mixing section 76 has a first length and a first diameter, and the exit section 78 has a second length different from the first length, and a second diameter different from the first diameter. In the illustrated embodiment, one or more concentric rings 80 are disposed in the exit section 78.

Referring to FIG. 11, the combustion nozzle 60 in accordance with an exemplary embodiment of the present invention is illustrated. The illustrated embodiment is similar to the embodiment shown in FIG. 7. Additionally, a wall 82 is disposed in the mixing section 64 of the combustion nozzle. The wall 82 partially occludes a portion of a flow passage of the mixing section 64. The wall location is designed to avoid flame holding within the combustion chamber while increasing turbulence levels in the fuel air mixture.

In certain embodiments, all permutations and combinations discussed of features discussed with reference to FIGS. 1-11 are envisioned. As discussed above, the embodiments of the present invention facilitates decoupling of mixing of air-fuel mixture from the turbulent flow of the air-fuel mixture, leading to lower NOx emissions.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:

1. A combustion nozzle, comprising:

at least one passage comprising:

a mixing section comprising an air inlet, and a fuel inlet; wherein the mixing section has a first length and a first diameter; and

an exit section having a second length different from the first length, and a second diameter different from the first diameter.

2. The combustion nozzle of clause 1, wherein the first length is greater than the second length and the first diameter is greater than the second diameter respectively.

3. The combustion nozzle of clause 1 or clause 2, wherein the first length is greater than the second length and the first diameter is smaller than the second diameter.

4. The combustion nozzle of any preceding clause, wherein the second diameter comprises a gradually varying diameter.

5. The combustion nozzle of any preceding clause, wherein the mixing section is configured to mix air and a fuel to generate an air-fuel mixture.

6. The combustion nozzle of any preceding clause, wherein the exit section is configured to inject the air-fuel mixture from the nozzle.

7. The combustion nozzle of any preceding clause, wherein the exit section comprises at least one air injection hole.

8. The combustion nozzle of any preceding clause, further comprising a plurality of turbulence generating devices disposed in at least one of the mixing section, the exit section.

9. The combustion nozzle of any preceding clause, wherein the plurality of turbulence generating devices are disposed circumferentially in at least one of the mixing section, the exit section.

10. The combustion nozzle of any preceding clause, wherein the plurality of turbulence generating devices are disposed axially in at least one of the mixing section, the exit section.

11. The combustion nozzle of any preceding clause, further comprising one or more concentric rings disposed in the exit section.

12. The combustion nozzle of any preceding clause, wherein the mixing section comprises a turbulence wall extending between a first side wall and a second side wall.

13. A gas turbine, comprising:

an air compressor;

a combustor coupled to the compressor, the combustor comprising

a casing; and

a combustion nozzle disposed upstream of a combustion zone within the casing;

wherein the combustion nozzle comprises:

at least one passage comprising:

a mixing section comprising an air inlet, and a fuel inlet; wherein the mixing section has a first length and a first diameter; and

an exit section having a second length different from the first length, and a second diameter different from the first diameter; and

a turbine coupled to the combustor.

14. The gas turbine of any preceding clause, wherein the first length is greater than the second length and the first diameter is greater than the second diameter respectively.

15. The gas turbine of any preceding clause, wherein the first length is greater than the second length and the first diameter is smaller than the second diameter.

16. The gas turbine of any preceding clause, wherein the second diameter comprises a gradually varying diameter.

17. The gas turbine of any preceding clause, wherein the mixing section is configured to mix air and a fuel to generate an air-fuel mixture.

18. The gas turbine of any preceding clause, wherein the exit section is configured to inject the air-fuel mixture from the nozzle to the combustion zone and generate turbulent flow of the air-fuel mixture within the combustion zone.

19. The gas turbine of any preceding clause, wherein the exit section comprises at least one air injection hole.

20. The gas turbine of any preceding clause, further comprising a plurality of turbulence generating devices disposed in at least one of the mixing section, the exit section.

21. The gas turbine of any preceding clause, further comprising one or more concentric rings disposed in the exit section.

22. The gas turbine of any preceding clause, wherein the mixing section comprises a turbulence wall extending between a first side wall and a second side wall.

23. A method, comprising:

mixing air and a fuel within a mixing section of a combustion nozzle to generate an air-fuel mixture; wherein the mixing section has a first length and a first diameter;

injecting the air-fuel mixture via an exit section of the combustion nozzle to a combustion zone disposed downstream of the combustion nozzle; wherein the exit section has a second length different from the first length, and a second diameter different from the first diameter; and

generating a turbulent flow of the air-fuel mixture in the combustion zone.

24. The method of any preceding clause, further comprising injecting air via a plurality of injection holes in the exit section to generate turbulent flow of the air-fuel mixture in the combustion zone.

25. A method, comprising:

forming at least one passage in a combustion nozzle; wherein the at least one passage comprises:

a mixing section comprising an air inlet, and a fuel inlet; wherein the mixing section has a first length and a first diameter; and

an exit section having a second length different from the first length, and a second diameter different from the first diameter.

26. The method of any preceding clause, wherein the second diameter comprises a gradually varying diameter.

27. The method of any preceding clause, further comprising disposing a plurality of turbulence generating devices in at least one of the mixing section, the exit section.

28. The method of any preceding clause, further comprising disposing one or more concentric rings disposed in the exit section.

## Claims

1. A combustion nozzle (28), comprising:

at least one passage (30) comprising:

a mixing section (32) comprising an air inlet, and a fuel inlet; wherein the mixing section has a first length and a first diameter; and an exit section (34) having a second length different from the first length, and a second diameter different from the first diameter.

2. The combustion nozzle of claim 1 or claim 2, wherein the first length is greater than the second length and the first diameter is greater than the second diameter respectively.

3. The combustion nozzle of any preceding claim, wherein the first length is greater than the second length and the first diameter is smaller than the second diameter.

4. The combustion nozzle of any preceding claim, wherein the second diameter comprises a gradually varying diameter.

5. The combustion nozzle of any preceding claim, wherein the mixing section is configured to mix air and a fuel to generate an air-fuel mixture.

6. The combustion nozzle of any preceding claim, wherein the exit section is configured to inject the air-fuel mixture from the nozzle.

7. The combustion nozzle of any preceding claim, wherein the exit section comprises at least one air injection hole.

8. The combustion nozzle of any preceding claim, further comprising a plurality of turbulence generating devices disposed in at least one of the mixing section, the exit section.

9. The combustion nozzle of any preceding claim, wherein the plurality of turbulence generating devices are disposed circumferentially in at least one of the mixing section, the exit section.

10. The combustion nozzle of any preceding claim, wherein the plurality of turbulence generating devices are disposed axially in at least one of the mixing section, the exit section.

11. The combustion nozzle of any preceding claim, further comprising one or more concentric rings disposed in the exit section.

12. The combustion nozzle of any preceding claim, wherein the mixing section comprises a turbulence wall extending between a first side wall and a second side wall.

13. A gas turbine, comprising:

an air compressor;
a combustor coupled to the compressor, the combustor comprising
a casing; and
a combustion nozzle according to any one of the preceding claims, disposed upstream of a combustion zone within the casing; wherein the combustion nozzle comprises: and
a turbine coupled to the combustor.

14. A method, comprising:

mixing air and a fuel within a mixing section of a combustion nozzle to generate an air-fuel mixture; wherein the mixing section has a first length and a first diameter;
injecting the air-fuel mixture via an exit section of the combustion nozzle to a combustion zone disposed downstream of the combustion nozzle; wherein the exit section has a second length different from the first length, and a second diameter different from the first diameter; and
generating a turbulent flow of the air-fuel mixture in the combustion zone.

15. A method, comprising:

forming at least one passage in a combustion nozzle; wherein the at least one passage comprises:

a mixing section comprising an air inlet, and a fuel inlet; wherein the mixing section has a first length and a first diameter; and
an exit section having a second length different from the first length, and a second diameter different from the first diameter.

FIG. 1

FIG. 2

FIG. 3

Fuel/Air
Mixture

$\frac{du}{dy}$ larger at wall

Higher shear rate

$\frac{du}{dy}$ lower at wall

Reduced shear rate

FIG. 4

FIG. 5

EP 2 660 522 A2

FIG. 6

EP 2 660 522 A2

60

Fuel

62

Air

64

66

FIG. 7

60

Fuel

62

Air

64

68

66

FIG. 8

60

Fuel

62

Air

64

70

66

FIG. 9

72

Fuel

74

Air

76          78          80

FIG. 10

60

Fuel

62

Air          82

64          66

FIG. 11